## Europäisches Patentamt

## European Patent Office

## Office européen des brevets

(19)

(11) Veröffentlichungsnummer: **0 105 176**
**B1**

(12) **EUROPÄISCHE PATENTSCHRIFT**

(45) Veröffentlichungstag der Patentschrift:
27.04.88

(21) Anmeldenummer: **83106354.8**

(22) Anmeldetag: **24.06.83**

(51) Int. Cl.⁴: **B 62 M 25/02**

(54) Verbindungseinrichtung für einen Betätigungsschaltzug.

(30) Priorität: **09.09.82 DE 3233433**

(43) Veröffentlichungstag der Anmeldung:
**11.04.84 Patentblatt 84/15**

(45) Bekanntmachung des Hinweises auf die Patenterteilung:
**27.04.88 Patentblatt 88/17**

(84) Benannte Vertragsstaaten:
**AT CH DE FR GB LI NL SE**

(56) Entgegenhaltungen:
**DE-A-2 717 304**
**DE-B-1 005 394**
**DE-B-2 759 581**
**GB-A-1 582 796**
**US-A-2 773 398**

(73) Patentinhaber: **Fichtel & Sachs AG, Ernst- Sachs-Strasse 62, D-8720 Schweinfurt (DE)**

(72) Erfinder: **Keller, Josef, Hans- Holbein- Strasse 31 a, D-8720 Schweinfurt (DE)**
Erfinder: **Steuer, Werner, Karl- Fichtel- Strasse 35, D-8720 Schweinfurt (DE)**

(74) Vertreter: **Weickmann, Heinrich, Dipl.- Ing., Patentanwälte Dipl.- Ing. H.Weickmann Dipl.-Phys.Dr. K.Fincke Dipl.- Ing. F.A.Weickmann Dipl.- Chem. B. Huber Dr.- Ing. H. Liska Dipl.-Phys.Dr. J. Prechtel Postfach 860820, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 105 176 B1

## Beschreibung

Die Erfindung betrifft eine Gangschaltung an einem Fahrrad od. dgl., umfassend eine Schaltvorrichtung am Hinterrad des Fahrrads, einen im Griffbereich des Fahrradbenutzers angeordneten Handschalter und eine den Handschalter mit der Schaltvorrichtung verbindende Schaltzugeinrichtung, diese Schaltzugeinrichtung ausgeführt mit einem mit der Schaltvorrichtung verbundenen Angriffsteil und einem von dem Handschalter hergeführten Schaltzug sowie eine den Angriffsteil und den Schaltzug verbindende Verbindungseinrichtung, wobei die Verbindungseinrichtung eine röhrenförmige Aufnahme und einen in die röhrenförmige Aufnahme einführbaren und in dieser verstellbaren, feststellbaren und wieder lösbaren Anschlußteil aufweist.

Eine derartige Gangschaltung ist aus der DE-C-1 005 394 bekannt. Die Schaltzugeinrichtung ist auch bei dieser bekannten. Ausführungsform geteilt. Dabei ist die Verbindungseinrichtung als eine Schraubverbindung ausgeführt mit einer Innengewindehülse am Ende des als Schaltseilzug ausgeführten Schaltzugs und einem entsprechenden Gewindebolzen mit Kontermutter am Ende des aus einer Gangschaltnabe herausgeführten Schaltkettchens. Die beiden Teile: Innengewindehülse und Gewindebolzen werden zusammengeschraubt bis die Spannung der Schaltzugeinrichtung so groß ist, daß die Übertragung der Schalterbewegung zu einem exakten Schaltvorgang im Nabengetriebe führt. Die Verbindungseinrichtung muß bei einem Ausbau des Hinterrads völlig getrennt werden. Bei einem Wiedereinbau ist nicht nur die Schraubverbindung wieder herzustellen, sondern es ist auch eine erneute Justage der Seilspannung durch Verschrauben notwendig, um eine exakte Funktion der Gangschaltung zu erreichen. Hierzu ist einiger Zeitaufwand und ein gewisses Maß an technischem Gefühl notwendig. Dieser Aufwand ist insgesamt nicht günstig.

Der Erfindung liegt die Aufgabe zugrunde, eine Gangschaltung anzugeben, bei der das Lösen und der Zusammenbau der Verbindungseinrichtung erleichtert ist.

Zur Lösung dieser Aufgabe wird erfindungsgemäß vorgeschlagen, daß der Anschlußteil in die röhrenförmige Aufnahme einerseits ohne Relativdrehung selbsthaltend einsteckbar und andererseits wieder lösbar ist dadurch, daß an dem einen der Elemente: röhrenförmige Aufnahme und Anschlußteil mindestens eine in Einsteckrichtung verlaufende Rastfläche und an dem anderen dieser Elemente mindestens ein beim Einstecken über die Rastfläche hinweggleitendes und zum Lösen von Hand von der Rastfläche abhebbares Eingriffsorgan vorgesehen ist.

Durch diese Ausführung der Verbindungseinrichtung wird deren Zusammenfügen und Lösen besonders einfach. Die Einstellung ist unkritisch, da die eintretende Spannung der Schaltzugeinrichtung unmittelbar als Widerstand fühlbar ist.

Der Erfindungsvorschlag ist sowohl für Nabenschaltgetriebe als auch für Kettenschaltungen, insbesondere positionierte Kettenschaltungen verwendbar.

Weitere vorteilhafte Ausgestaltungen der Erfindung sind in den Unteransprüchen angegeben.

Die Erfindung wird nachstehend an Hand von in der Zeichnung schematisiert und in Schnittansicht veranschaulichten Ausführungsbeispielen näher erläutert. Es zeigen:

Fig. 1 ein Verbindungselement mit symmetrischem Rastelement in Druckgußausführung;

Fig. 2 ein Verbindungselement mit nur einem Rastelement, gleichfalls in Druckgußausführung;

Fig. 3 das Verbindungselement gem. Fig. 2 mit unmittelbar befestigtem Zugseil;

Fig. 4 das Element gem. Fig. 2 mit einer in die Befestigung- des Zugseilendes im Gehäuse eingefügten Vorwahlfeder;

Fig. 5 eine Ausführungsform mit Sperrorgan in Form einer angefederten Kralle;

Fig. 6 eine Schnittansicht eines weiteren Verbindungselementes, gleichfalls in Druckgußausführung;

Fig. 7 eine andere Ausführungsform eines Verbindungselementes, ebenfalls in Druckgußausführung;

Fig. 8 eine andere Ausführungsform eines Verbindungselementes in einer Blechkonstruktion;

Fig. 8a eine Schnittansicht der Ausführungsform gem. Fig. 8;

Fig. 9 eine abgewandelte Ausführungsform eines Verbindungselementes in Blechkonstruktion:

Fig. 9a eine Schnittansicht der Ausführungsform gem. Fig. 9;

Fig. 10 eine Schnittansicht einer Ausführungsform mit symmetrischen Rastelementen, in Blechkonstruktion;

Fig. 11 eine Schnittansicht einer Ausführungsform mit einer Federsperrscheibe und

Fig. 12 eine schematische Darstellung einer Fahrradschaltnabe mit einem Gangwahlschalter und einer Schaltzugeinrichtung nach der Erfindung.

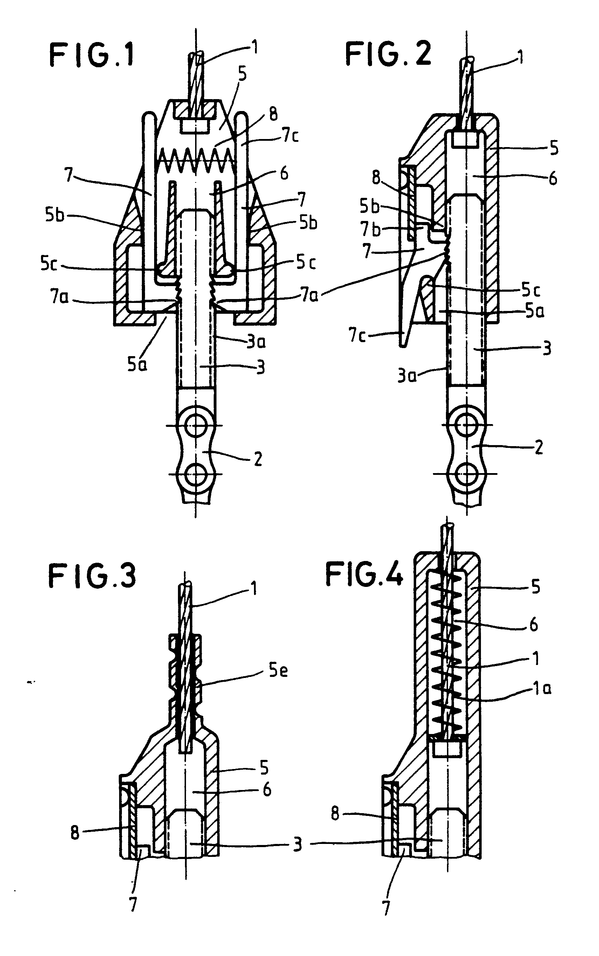

In den Figuren 1 bis 11 ist jeweils mit 1 ein Schaltseil bezeichnet, während 2 einen Zugkettchen-Anschluß zu der zu schaltenden Nabe angibt. Mit 3 ist das gesondert gestaltete Anschlußteil am Zugkettchen 2 bezeichnet. Ein vom Anschlußteil 3 in seiner Ausführung abweichendes Anschlußteil ist mit 4 angegeben. Das zu jeder Schaltzug-Verbindungseinrichtung gehörige Gehäuse, ggf. in unterschiedlicher Ausgestaltung, ist allgemein mit 5 bezeichnet. In das Gehäuse 5 greift in den Darstellungen der erfindungsgemäßen Ausführungsformen in der Zeichnungslage oben das Ende eines Schaltseilzuges 1 ein und ist mit dem Gehäuse zugfest verbunden.

Im einzelnen zeigt das Ausführungsbeispiel gem. Fig. 1 ein Gehäuse 5, an welchem - in der Zeichnungsfigur - oben das Schaltzugseil 1 angreift. Das vom Seilzug beaufschlagte Gehäuse 5 ist in der Grundform etwa schachtelförmig mit oben verminderter Breite ausgestaltet und weist - dem Seileintritt entgegengesetzt - eine Durchlaßöffnung 5a auf, durch welche ein Anschlußteil 3 des Zugkettchens 2 für die Fahrrad-Gangschaltung in eine umschließende, gehäusefeste Aufnahme 6 hineinragt und darin mittels eines Eingriffsorganes in Form von symmetrisch angeordneten Rastbügeln 7 gehalten ist. Diese Rastbügel 7 wirken mittels ihrer Gegenverzahnung 7a mit dem eingesteckten Anschlußteil 3 zusammen, welches beispielsweise in Form eines Stiftes mit Rechteckquerschnitt mit auf seiner Länge verteilten, quer zur Längsachse angeordneten Rastkerben bzw. Rastrillen 3a ausgestattet ist. Die Rastbügel 7 sind gegenüberliegend angeordnet und stehen unter Einfluß einer sich spreizenden Druckfeder 8. Als Gegenlager für die Rastbügel 7 sind im Gehäuse 5 einerseits Endanschläge 5b und andererseits Kipplager 5c vorgesehen. Das vorstehend erläuterte Gehäuse 5 mit den gehäusefesten Einbauelementen ist zweckmäßig als Druckgußteil hergestellt.

Im in der Fig, 1 dargestellten Funktionszustand wird das die Öffnung 5a eingesteckte Anschlußteil 3 am Ende der Zugkette 2 von den Rastzähnen 7a an den federbelasteten Rastbügeln 7 gehalten. Die Verrastung des in das Verbindungselement eingeschobenen Anschlußteiles wird durch die ständig wirkende Federkraft eingeleitet und dann aufrecht erhalten. Zu einem ggf. erforderlichen Nachspannen der Schaltzuganordnung werden das Anschlußteil 3 und das Gehäuse 5 lediglich weiter zusammengeschoben. Die federnden Bügel 7 rasten dann - ohne jegliche Handbetätigung - in die nächste Rastkerbe 3a am Anschlußteil 3 ein. - Nur zu einem Lösevorgang zwecks Herausnehmen des Anschlußteiles werden die Rastbügel 7 von Hand gegen die Spannung der Feder 8 zusammengedrückt, wodurch die Eingriffsverbindung gelöst werden kann. Auf diese einfache Weise wird das Anschlußteil 3 zum Herausziehen aus dem Gehäuse 5 freigegeben.

Eine weitere Ausführungsform einer erfindungsgemäß ausgebildeten Schaltzugverbindung, welche sowohl steckbar als auch lösbar ist, ist in Fig. 2 gezeigt. Bei diesem Ausführungsbeispiel nimmt ein Gehäuse 5 mit etwa rechteckigem Querschnitt in seinem oberen Bereich das Ende des Schaltseilzuges 1 auf, während in eine untere Gehäuseöffnung 5a das Anschlußstück 3 eines Gangschaltzuges 2 bis zu einer ausreichenden Spannung des Schaltseilzuges eingesteckt ist. In dieser Lage wird das mit Rastkerben bzw. Rastrillen 3a versehene Anschlußstück 3 mittels eines Eingriffselementes in Form eines Rasthebels 7, welcher mittels eines Kipplagers 5c im Gehäuse schwenkbar gehalten ist und, unter Wirkung einer hier als Blattfeder ausgebildeten Feder 8 stehend, mit seinen Rastzähnen 7a mit den Rastrillen 3a am angesteckten Anschlußteil 3 im Eingriff steht, gehalten, Auch hier ist das Anschlußteil 3 vorteilhaft als Stift mit Rechteckquerschnitt ausgebildet. Die Verrastung wird nach einem erfolgten Einschieben des Anschlußteiles 3 in die Aufnahme 6 des Gehäuses 5 durch die Kraft der auf den Rasthebel 7 einwirkenden Blattfeder 8 eingeleitet und bei auftretender Zugspannung im Seilzug durch Selbstverstärkung gehalten, Dabei wird der Rasthebel 7 an das Anschlußteil 3 herangedrückt. Bei gelöster Verbindung legt sich der Rasthebel 7 mit einem oberhalb der Rastkerben 7a vorgesehenen Nocken 7b gegen die Wandung 5b des Gehäuses 5 an und befindet sich auf diese Weise in seiner Endstellung.

Zum manuellen Lösen des Anschlußteiles aus dem Gehäuse 5 wird der Rasthebel 7 gegen die Spannung der Blattfeder 8 geschwenkt und auf diese Weise mit den Rastrillen 3a außer Eingriff gebracht. Der Rasteingriff als solcher wird nach Einführen des Anschlußteiles 3 durch eine verhältnismäßig geringe Federkraft eingeleitet und bei einsetzender Zugspannung vom Schaltseilzug her durch Selbstverstärkung gehalten, welche auf Grund der speziellen geometrischen Lage von Lagerung und Eingriff des Rasthebels 7 erreicht wird.

Auch diese Ausführungsform einer Schaltzug-Verbindungseinrichtung wird vorteilhaft als Druckgußteil hergestellt.

Fig. 3 zeigt zum vorbeschriebenen Beispiel gem. Fig. 2 als Einzelheit eine Ausführungsvariante, bei welcher das Schaltseil 1 unmittelbar oben im Gehäuse 5 befestigt ist, und zwar durch Einklemmen. Es ist der am Gehäuse 5 angeformte, hülsenförmige Ansatz 5e zu erkennen, in welchem das Ende des Schaltzugseiles durch Klemmung befestigt ist.

Fig. 4 zeigt zum Ausführungsbeispiel gem. Fig. 2 eine andere Anordnung des Schaltseilzuges 1 im Gehäuse 5. Hier ist das Ende des Schaltseilzuges 1 unter Zwischenfügung einer auf Druck beanspruchbaren Schraubenfeder 1a oben im Gehäuse 5 angeordnet. Diese Druckfeder 1a kann dabei die Funktion einer Vorwahlfeder zum Speichern zumindest eines eingeschalteten, jedoch noch nicht umgesetzten Ganges der Schaltung übernehmen. Zu dieser Ausgestaltung ist das Gehäuse 5 gegenüber dem im Beispiel gem. Fig. 2 dargestellten Gehäuse in seinem oberen Bereich in Art einer Hülse um ein gewisses Maß verlängert. Diese Verlängerung dient zur Aufnahme des Federelementes 1a, welches sich gegen das mit einer Platte versehene Ende des Schaltseilzuges 1 legt und andererseits am inneren Ende des Gehäuseansatzes abstützt. Im übrigen ist diese Schaltzug-Verbindungseinrichtung so ausgebildet, wie es in Fig, 2 beispielsweise dargestellt ist.

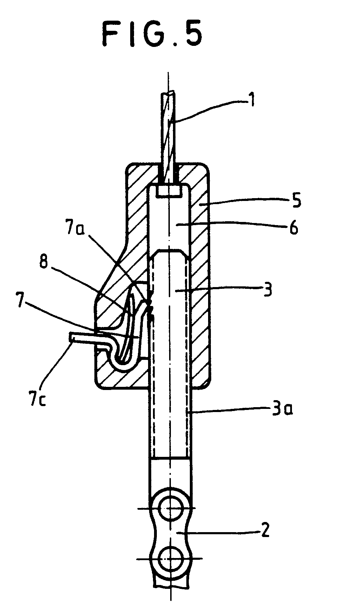

In Fig. 5 ist eine Ausführungsform einer Schaltzug-Verbindungseinrichtung in Abwandlung des Beispieles gem. Fig. 2 gezeigt, bei welcher gleichfalls an einem Druckgußgehäuse 5 einerseits ein Schaltseilzug 1 angreift und in welchem andererseits das Anschlußteil 3 eines Schaltkettchens 2 aufgenommen ist. Das Anschlußteil 3 wird auch hier in die Gehäuseaufnahme 6 eingesteckt bis zum Erreichen einer ausreichenden Spannung des Schaltzugsystemes. Die Verrastung des Anschlußteiles 3 im Gehäuse 5 erfolgt völlig selbsttätig. Dazu ist in einer Tasche des Gehäuses ein Rastorgan in Form einer etwa bügelförmig gestalteten Kralle 7 in einer Mulde verschwenkbar gelagert, welche mit dem einen als Rastzahn 7a ausgebildeten Ende in die Rastrillen bzw, Rastkerben 3a des Anschlußteiles 3 eingreifen, und zwar unter Wirkung einer Feder 8, welche als Blattfeder ausgestaltet, sich gegen die Gehäusetasche legt und andererseits die Kralle 7 in Eingriffsstellung hält. Für ein Lösen der Seilzugverbindung ist an der Kralle 7 eine aus dem Gehäuse herausragende Handhabe 7c vorgesehen, mit welcher das Sperrorgan gegen die Blattfeder 8 außer Eingriff geschwenkt werden kann,

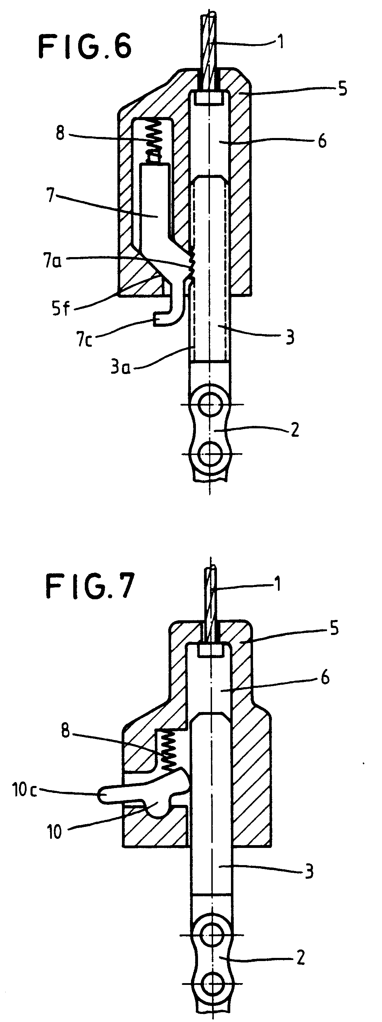

In Fig. 6 ist eine abgewandelte Ausführungsform des Beispieles gem. Fig, 2, gleichfalls als Druckgußteil ausgebildet, dargestellt. Ein etwa prismatisches Gehäuse 5 ist an der Oberseite mit einem Schaltzugseil 1 fest verbunden, während im Innern des Gehäuses 5 eine Aufnahme 6 für ein von unten her einzusteckendes Anschlußteil 3 eines Schaltzugkettchens 2 vorgesehen ist. In der Gehäuseaufnahme 6 ist das Anschlußteil 3 allseitig gleitend geführt. Seitlich am Gehäuse 5 ist in einem angeformten Bereich ein Eingriffsorgan in Form eines Schiebers 7 angeordnet, welcher mittels einer Anordnung von Rastzähnen 7a durch einen fensterartigen Durchbruch im Gehäuse 5 greifend, mit den Rastrillen 3a des eingesteckten Anschlußteiles 3 im Sperrsinn zusammenwirken kann. Dazu ist der Schieber 7 gleitend und parallel zur Aufnahme 6 geführt und steht dabei ständig unter Einfluß einer Druckfeder 8, welche auf den Schieber nach unten einwirkt, wodurch dieser mittels einer schiefen Ebene 5f in seiner Führung ständig gegen die Rastelemente 3a des Anschlußteiles 3 gedrückt wird, Während beim Einbringen des Anschlußteiles 3 in die Aufnahme 6 der Schieber 7 nach oben außer Eingriff gebracht wird, stellt sich bei einer im System auftretenden Seilspannung eine selbstverstärkende Andruckkraft seitens dieses Schiebers 7 mit seinen Rastzähnen 7a auf die Rastorgane 3a am Anschlußteil 3 ein. - Zum Lösen des vorbeschriebenen Schiebers 7, d. h., des Eingriffes, dient eine aus dem Gehäuse 5 herausragende Handhabe 7c, welche am Schieber 7 vorgesehen ist,

In Fig. 7 schließlich ist eine Ausführungsform einer erfindungsgemäßen Verbindungseinrichtung für einen Schaltseilzug gezeigt, bei welcher wiederum das Schaltzugseil 1 im Gehäuse 5 befestigt ist, das seinerseits in einer Aufnahme 6 einen Anschlußteil 3 allseitig geführt aufnimmt. - Das Gehäuse 5 wird zweckmäßig als Druckgußteil hergestellt.

Das eingesteckte Anschlußteil 3 steht unter der kraftschlüssigen Wirkung eines Klemmhebels 10, welcher in einem Ansatz am Gehäuse 5 gelagert ist und sich unter Wirkung einer Druckfeder 8 ständig gegen die eine Seitenfläche des auch hier einen Rechteckquerschnitt aufweisenden Anschlußteiles 3 legt. Diese Eingriffsverbindung ist in einfacher Weise durch ein Einschieben des Anschlußteiles 3 in die Aufnahme 6 des Gehäuses 5 herstellbar und ergibt eine kraftschlüssige, selbsthemmende Verbindung. Zum Lösen des Anschlußteiles aus der Aufnahme 6 ist es lediglich erforderlich, den Klemmhebel 10 gegen die Spannung der Feder 8 mittels der Handhabe 10c außer Eingriff zu schwenken.

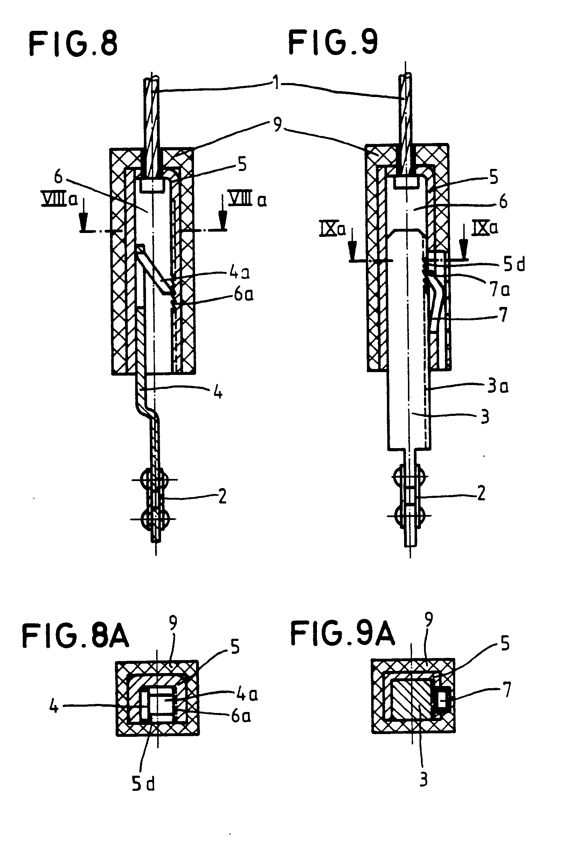

In Fig. 8 ist eine weitere Ausführungsform einer erfindungsgemäßen Verbindungseinrichtung für den Schaltseilzug dargestellt. Es ist ein Gehäuse 5 etwa in Form eines Prismas zu erkennen (vgl. Fig. 8a), in welchem oben das Schaltzugseil 1 befestigt ist. Dieses Gehäuse 5 wird von einem kappenartigen, überschiebbaren Teil 9 gleitend übergriffen, Das Innere des Gehäuses 5 ist als Aufnahme 6 für ein Anschlußteil ausgebildet, welches in diesem Ausführungsbeispiel als ein in der Grundform flaches Einsteckteil 4 an einer Schaltzugkette 2 ausgestaltet ist, welches einen federnden Abspreizteil 4a aufweist. Mit letzterem gelangt das Einsteckteil 4 zum Eingriff mit einer Anordnung von über die gesamte innere Länge der Aufnahme 6 innerhalb des Gehäuses 5 sich erstreckenden Rastzähnen 6a. Das kappenartige Überwurfteil 9 übergreift glockenartig und eng das Gehäuse 5 und schließt auf diese Weise die erfindungsgemäß offen ausgebildete eine Seite 5d des Gehäuses 5, so daß das Einsteckteil 4 allseitig geführt ist, wie insbesondere Fig. 8a erkennen läßt. Die Funktion dieses Ausführungsbeispieles ist die gleiche wie bei den vorbeschriebenen Ausführungsbeispielen. Das Einsteckteil 4 am Ende der Anschlußkette 2 läßt sich bis zum ausreichenden Spannen des Schaltseilzuges 1 in die Aufnahme 6 einbringen und verrastet dort selbsthemmend, - Zum Lösen dieser Einsteckverbindung wird das Überwurfteil 9 nach oben abgehoben und auf diese Weise das Einsteckteil 4 mit seinem Sperrlappenteil 4a freigelegt, d, h., es kann durch die Gehäuseöffnung 5d seitlich aus der Verrastung 6a herausgenommen werden. Bei dieser Ausgestaltung ist es auch möglich, den Spreizlappen 4a als gesondertes Teil zu fertigen und mit dem Einsteckteil 4 beispielsweise durch Nietung zu verbinden,

Ein weiteres Ausführungsbeispiel einer erfindungsgemäßen Schaltzug - Verbindungseinrichtung ist in den Figuren 9 und 9a dargestellt. Ebenso wie das Ausführungsbeispiel gem. Fig. 8 ist auch diese Ausführungsform als Blechkonstruktion ausgestaltet. Es is thier ein Gehäuse 5 vorhanden, in welchem das Schaltzugseil 1 im oberen Bereich endet, Das Gehäuse bildet innen eine Aufnahme 6 für ein Anschlußteil 3, welches den bereits beschriebenen Rechteckquerschnitt aufweist (vgl. Fig. 9a). Das Gehäuse 5 weist seitlich einen fensterartigen, sich in Längsrichtung erstreckenden Durchbruch 5d auf, in welchem als Eingriffsorgan ein Rastteil 7 aus federndem Material angeordnet ist und dabei durch ein das Gehäuse 5 dicht übergreifendes Überwurfteil 9 in seiner Eingriffsstellung gehalten wird. Der Rastteil 7 wird mit seiner oben gelegenen Eingriffskante 7a mit den Rastzähnen 3a an der Längsseite des eingesteckten Anschlußteiles 3 zusammen und hält das Anschlußteil in der beim Einstecken von Hand erreichten Lage fest.

Ein Lösen dieser Steckverbindung läßt sich dadurch erreichen, daß das übergreifende Kappenteil 9 gegenüber dem Gehäuse 5 axial verschoben wird, wodurch dann der im Fenster 5d seitlich angeordnete Rastteil 7 sich nach außen bewegen läßt und auf diese Weise außer Eingriff mit den Rastelementen 3a am Anschlußteil 3 gelangt. - Zweckmäßig kann es auch sein das Gehäuse 5 und das Rastteil 7 einteilig herzustellen, d. h. der Rastteil 7 ist dann als herausgestanzter, federnder Lappen ausgebildet.

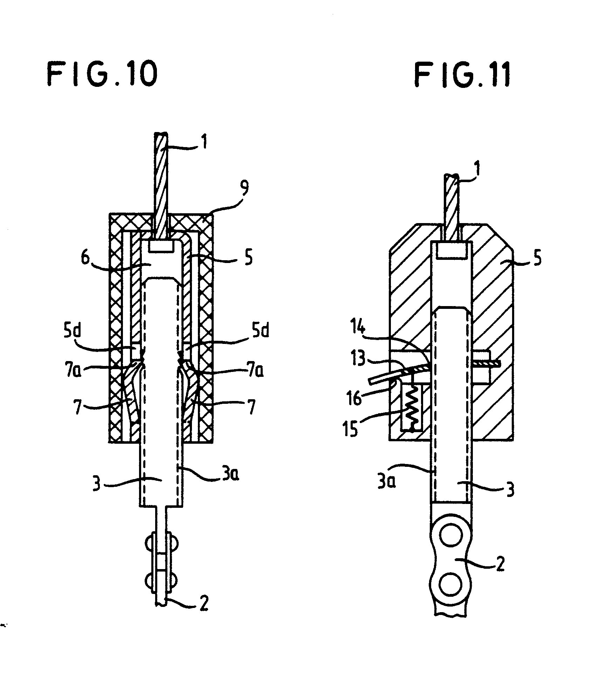

In Fig. 10 ist eine weitere Ausführungsform dargestellt, die im Prinzip der Ausführungsform gem. Fig. 9 gleicht, wobei jedoch statt eines Rastteiles nunmehr einander gegenüberliegend zwei Rastteile 7 vorgesehen sind. Die Wirkungsweise bzw. Handhabung dieser Verbindungseinrichtung ist gleich derjenigen, welche bei dem Ausführungsbeispiel gem. Fig. 9 ausführlich erläutert worden ist.

Bei einer weiteren Ausführungsform gem. Fig. 11 einer Schaltzug-Verbindungseinrichtung ist das Gehäuse 5 zur steckbaren Aufnahme des Anschlußteiles 3 mit einer schräg zur Achse dieser Aufnahme angeordneten Federsperrscheibe 13 versehen, welche kippbar angebracht ist und in einer verhältnismäßig engen Bohrung 14 vom eingesteckten Anschlußteil 3 durchdrungen wird. Die Federsperrscheibe 13 ist gegen die Spannung einer Rückholfeder 15 bis in eine Ebene etwa senkrecht zur Achse des Anschlußteils 3 aufrichtbar, wodurch das Anschlußteil 3 leicht einschiebbar ist. Infolge der ständigen Spannung der Rückstellfeder 15 stellt sich die Federsperrscheibe 13 bei eingeschobenem Anschlußteil entsprechend der im Gehäuse vorgesehenen Auflage 16 sogleich wieder schräg zu dessen Achse, und es wird durch den Bohrungsrand 14 eine Rastverbindung mit den auf dem Anschlußteil auf dessen Länge vorgesehenen Rasten 3a hergestellt, wobei diese Verbindung durch die Spannung im Seilzug 1 sich noch verstärkt. Eine Trennung dieser Verbindung ist in einfacher Weise möglich, indem lediglich durch Aufrichten der Federsperrscheibe 13 gegen die Spannung der Rückstellfeder 15 in eine Ebene etwa senkrecht zum Anschlußteil 3 die Rastverbindung gelöst wird und ein Herausnehmen des Anschlußteiles 3 erfolgen kann.

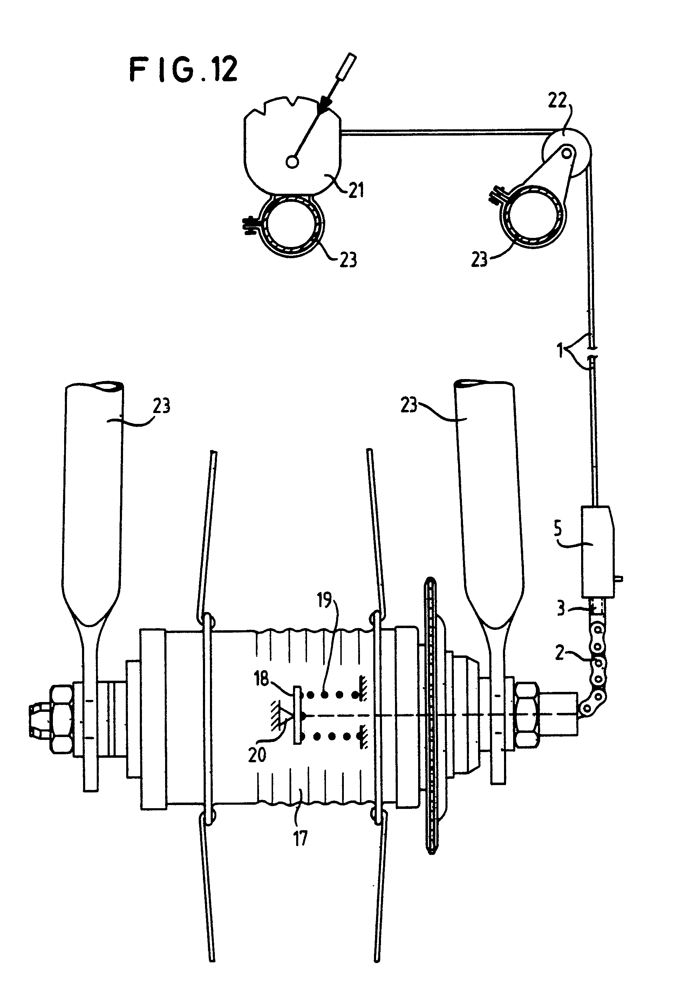

In Fig. 12 ist eine Fahrradschaltnabe mit 17 bezeichnet. Innerhalb dieser Nabe 17 ist schematisch ein Schaltelement 18 dargestellt, das durch eine starke Feder 19 in eine durch einen Anschlag 20 bestimmte Grundstellung vorgespannt ist. Das Schaltelement 18 kann von einem Gangschalter 21 aus über ein Seil 1 und die Kette 2 gegen die Wirkung der Feder 19 verstellt werden. Die Kette ist mit dem Seil 1 über eine der Rastverbindungen nach den Figuren 1-11 verbunden. Der Gangschalter 21, die Nabe 17 und die Umlenkrolle 22 sind am Fahrradrahmen 23 befestigt.

Den vorbeschriebenen Ausführungsformen einer erfindungsgemäß ausgestalteten Einrichtung zur Verbindung von Schaltzugteilen liegt der Gedanke zugrunde, daß beim Zusammenfügen durch Anspannen des Schaltzuges von Hand bereits die spannungsmäßig richtige Einstellung erreicht wird, weil das Zugseil vom Handschalter her auf Anschlag liegt und das Anschlußstück als Gegenstück von der Schaltung her mit einer starken Feder beaufschlagt ist, derart, daß das Anschlußteil selbst bzw. die damit verbundene Kette o. ä. nur mit großer Kraftanstrengung gegen die Spannung dieser Feder herausgezogen werden kann.

Wie aus der vorstehenden Beschreibung der Ausführungsbeispiele hervorgeht, umfaßt die erfindungsgemäße Verbindung zwischen Schaltzugseil und Nabenanschlußteil ein verhältnismäßig einfaches Gehäuse mit eben solchen funktionssicheren Elementen, nämlich Zugseil vom Schalter, Anschlußteil am Zugkettchen von der Nabe her, Eingriffsorgan (Rasthebel) und ggf. eine Druckfeder. Die Verrastung wird, wie beschrieben, entweder durch Federkraft eingeleitet und auch aufrecht erhalten, oder es erfolgt zunächst die Einleitung durch Federspannung, dann aber setzt entsprechend der Seilzugspannung im System eine Selbsthemmung bzw. eine Selbstverstärkung der zuvor erfolgten Rastung ein. Ebenso wie das Schließen der Verbindung lediglich durch Einstecken des Anschlußteiles in die entsprechend ausgebildete Aufnahme im Gehäuse des Verbindungsstückes, ist auch das Lösen der Verbindung in einfacher, vorbeschriebener Weise von Hand möglich. Die erfindungsgemäß ausgebildete Verbindungseinrichtung für einen Schaltzug ist sowohl für die Schaltung eines Nabengetriebes als auch einer positionierten Kettenschaltung verwendbar und dabei gleichermaßen für die Verwendung eines - Schaltseilzuges wie auch für einen Schaltdrahtzug geeignet.

Das Gehäuse der Verbindungseinrichtung kann nicht nur als Metall-Druckgußteil sondern ebenso vorteilhaft als Kunststoff-Spritzgußteil gefertigt sein.

Das einzusteckende Anschlußteil kann außer mit einem eckigen auch ebenso mit einem runden Querschnitt versehen sein und jeweils rundum verlaufende Rastkerben in Form eines Sägezahnes aufweisen, dessen steile Flanke der Zugrichtung zugekehrt ist.

Weiterhin kann das Anschlußteil als Stanzteil einen flachen Querschnitt aufweisen, wobei die Rastkerben jeweils an den Schmalseiten des Anschlußteiles vorgesehen sind.

**Patentansprüche**

1. Gangschaltung an einem Fahrrad od. dgl., umfassend eine Schaltvorrichtung (18, 19, 20) am Hinterrad des Fahrrads, einen im Griffbereich des Fahrradbenutzers angeordneten Handschalter (21) und eine den Handschalter (21) mit der Schaltvorrichtung (18, 19, 20) verbindende Schaltzugeinrichtung, diese Schaltzugeinrichtung ausgeführt mit einem mit der Schaltvorrichtung (18, 19, 20) verbundenen Angriffsteil (2) und einem von dem Handschalter (21) hergeführten Schaltzug (1) sowie eine den Angriffsteil (2) und den Schaltzug (1) verbindende Verbindungseinrichtung (5, 3), wobei die Verbindungseinrichtung (5, 3) eine röhrenförmige Aufnahme (6) und einen in die röhrenförmige Aufnahme (6) einführbaren und in dieser verstellbaren, feststellbaren und wieder lösbaren Anschlußteil (3) aufweist, dadurch gekennzeichnet, daß der Anschlußteil (3) in die röhrenförmige Aufnahme (6) einerseits selbsthaltend einsteckbar und andererseits wieder lösbar ist dadurch, daß an dem einen der Elemente: röhrenförmige Aufnahme (6) und Anschlußteil (3) mindestens eine in Einsteckrichtung verlaufende Rastfläche (3a) und an dem anderen dieser Elemente mindestens ein beim Einstecken über die Rastfläche (3a) hinweggleitendes und zum Lösen von Hand von der Rastfläche (3a) abhebbares Eingriffsorgan (7) vorgesehen ist.

2. Gangschaltung nach Anspruch 1, dadurch gekennzeichnet, daß die Verbindungseinrichtung ein in der Grundform etwa hülsenförmiges Gehäuseteil (5) aufweist, an dessen einem Ende ein Endteil des Schaltzugs (1) angreift und an dessen anderem Ende die röhrenförmige Aufnahme (6) för das mit dem Angriffsteil (2) verbundene Anschlußteil (3) vorgesehen ist.

3. Gangschaltung nach Anspruch 1 oder 2, dadurch gekennzeichnet, daß das Anschlußteil (3) auf seiner Oberfläche in Einsteckrichtung hintereinander eine Vielzahl von Rastkerben (3a) aufweist.

4. Gangschaltung nach Anspruch 3, dadurch gekennzeichnet, daß das Eingriffsorgan (7) zum Zusammenwirken mit den auf dem Anschlußteil (3) einseitig oder beidseitig angeordneten Rastkerben (3a) mit wenigstens einem Rastzahn (7a) ausgebildet ist, wobei das Eingriffsorgan (7) unter Spannung einer Feder (8) in Eingriffsstellung gehalten und von Hand abschwenkbar und außer Eingriff bringbar ist.

5. Gangschaltung nach einem der Ansprüche 1 bis 4, dadurch gekennzeichnet, daß zwei Eingriffsorgane (7) zum Zusammenwirken mit dem Anschlußteil (3) etwa gabelartig angeordnet sind mit einander gegenüberliegenden Eingriffselementen (7a), welche mittels eines Federelements (8) ständig im Eingriff mit dem Anschlußteil (3) gehalten werden und mittels lappenartiger Griffelemente (7c) außer Eingriff bringbar angeordnet sind.

6. Gangschaltung nach einem der Ansprüche 1 bis 4, dadurch gekennzeichnet, daß das Eingriffsorgan (7) mittels eines Federelements (8) geringer Stärke zum Eingriff mit dem Anschlußteil (3) bringbar ist und mittels Selbstverstärkung aufgrund der Zugspannung in der Schaltzugeinrichtung ständig im Eingriff gehalten wird, wobei dieser Eingriff mittels einer Handhabe (7c) am Eingriffsorgan (7) lösbar ist.

7. Gangschaltung nach Anspruch 1 oder 2, dadurch gekennzeichnet, daß das Eingriffsorgan (10) zum Zusammenwirken mit dem Anschlußteil (3) mittels einer Feder (8) geringer Stärke zum Eingriff gelangt und mittels Selbsthemmung infolge der Spannung der Schaltzugeinrichtung ständig im Eingriff gehalten wird, wobei dieser Eingriff mittels einer Handhabe (10c) am Eingriffsorgan (10) lösbar ist.

8. Gangschaltung nach einem der Ansprüche 1 bis 3, dadurch gekennzeichnet, daß das Eingriffsorgan (7) zum Zusammenwirken mit dem Anschlußteil (3) als eine zumindest einseitig in über die Länge des Anschlußteils (3) verteilte Rastkerben (3a) eingreifende Federzunge (7) ausgebildet ist, welche mittels eigener Federspannung oder mittels eines das Gehäuseteil (5) dicht übergreifenden Kappenteils (9) im Eingriff gehalten wird, wobei die Federspannung oder auch die Halterung der im Eingriff befindlichen Federzunge (7) durch Abstreifen des Kappenteiles (9) in Längsrichtung des Gehäuses (5) aufhebbar ist.

9. Gangschaltung nach Anspruch 1 oder 2, dadurch gekennzeichnet, daß die Aufnahme (6) über ihre Länge verteilt eine Mehrzahl von Rastkerben (6a) aufweist und daß an dem Anschlußteil ein federnd abgespreiztes Eingriffsorgan (4a) angebracht ist.

10. Gangschaltung nach Anspruch 1 oder 2, dadurch gekennzeichnet, daß das Anschlußteil (3) als Rastfläche eine im wesentlichen glatte Klemmfläche aufweist und daß das Eingriffsorgan (10) als ein unter Federvorspannung (8) mit dieser Klemmfläche zusammenwirkendes Klemmelement ausgebildet, an der Aufnahme (6) schwenkbar gelagert und mit einer aus der Aufnahme herausragenden Lösehandhabe (10c) ausgeführt ist.

11. Gangschaltung nach einem der Ansprüche 1 bis 3, dadurch gekennzeichnet, daß das Eingrifsorgan von einer in der Aufnahme schräg zur Einsteckrichtung angeordneten perforierten Federscheibe (13) gebildet ist, wobei das Anschlußteil (3) die Perforation (14) der Federscheibe (13) durchdringt, eine Kante der Perforation (14) mitder Rastfläche des Anschlußteils (3) in Rasteingriff steht und die Federscheibe (13) zur Lösung des Rasteingriffs gegen Federspannung aus der Schrägstellung auslenkbar ist.

12. Gangschaltung nach einem der Ansprüche 1 bis 4 und 6, dadurch gekennzeichnet, daß in einem die röhrenförmige Aufnahme (6) bildenden Gehäuseteil (5) seitlich neben der röhrenförmigen Aufnahme (6) eine Tasche ausgebildet ist, daß in dieser Tasche eine bügelförmig gestaltete Kralle (7) aufgenommen ist, daß diese Kralle (7) in einer innerhalb der Tasche ausgebildeten Mulde schwenkbar gelagert ist, daß ein Ende der Kralle (7) als ein Rastzahn (7a) zum Eingriff in Rastkerben (3a) des Anschlußteils (3) ausgebildet ist, daß das andere Ende (7c) der Kralle (7) aus dem Gehäuseteil (5) herausführt und als Lösehandhabe (7c) ausgebildet ist, und daß innerhalb der Tasche ferner eine Blattfeder (8) untergebracht ist, welche einerseits an einer Begrenzungswand der Tasche anliegt und andererseits die Kralle (7) mit ihrem als Rastzahn (7a) ausgebildeten Ende in Eingriff mit den Rastkerben (3a) spannt.

13. Gangschaltung nach Anspruch 12, dadurch gekennzeichnet, daß an der Kralle (7) innnerhalb der Tasche ein Lagerbügel gebogen ist, welcher in der Mulde verschwenkbar gelagert ist.

14. Gangschaltung nach einem der Ansprüche 2 bis 13, dadurch gekennzeichnet,daß das Gehäuseteil als Druckgußteil ausgebildet ist.

15. Gangschaltung nach einem der Ansprüche 2 bis 13, dadurch gekennzeichnet, daß das Gehäuseteil als Kunststoffspritzgußteil ausgebildet ist.

16. Gangschaltung nach einem der Ansprüche 1 bis 15, dadurch gekennzeichnet, daß das Anschlußteil (3) mit eckigem Querschnitt ausgeführt ist.

17. Gangschaltung nach einem der Ansprüche 1 bis 15, dadurch gekennzeichnet, daß das Anschlußteil (3) mit rundem Querschnitt ausgeführt ist.

18. Gangschaltung nach Anspruch 17, dadurch gekennzeichnet, daß das Anschlußteil (3) mit rundum verlaufenden Rastkerben ausgeführt ist.

19. Gangschaltung nach einem der Ansprüche 3 bis 6, 8, 9, 11 und 12 bis 18, dadurch gekennzeichnet, daß die Rastkerben (3a) in Form eines Sägezahns ausgeführt sind.

20. Gangschaltung nach einem der Ansprüche 1 bis 19, dadurch gekennzeichnet, daß die Schaltvorrichtung (18, 19, 20) als Nabenschaltvorrichtung ausgebildet ist.

21. Gangschaltung nach Anspruch 20, dadurch gekennzeichnet, daß das Angriffsteil (2) als Schaltkettchen ausgebildet ist.

22. Gangschaltung nach Anspruch 21, dadurch gekennzeichnet, daß das Anschlußteil (3) am Ende des Schaltkettchens (2) angebracht ist.

23. Gangschaltung nach einem der Ansprüche 1 bis 19, dadurch gekennzeichnet, daß die Schaltvorrichtung als Kettenschaltvorrichtung ausgebildet ist.

24. Gangschaltung nach einem der Ansprüche 1 bis 23, dadurch gekennzeichnet, daß die Schaltvorrichtung (18, 19, 20) ein Schaltelement (18) umfaßt, das durch eine starke Feder (19) in eine durch einen Anschlag (20) bestimmte Grundstellung vorgespannt ist und durch den Gangschalter (21) unter Vermittlung der Schaltzugeinrichtung in weitere Schaltstellungen einstellbar ist.

**Claims**

1. Gear-change system on a bicycle or the like, comprising a gear-change device (18, 19, 20) on the rear wheel of the bicycle, a manual change element (21) within reach of the cycle user and a gear-change draw device connecting the manual change element (21) with the gear - change device (18, 19, 20), this gear-change draw device formed with an action part (2) connected with the gear - change device (18, 19, 20), this gear-change draw device formed with an action part (2) connected with the gearchange device (18, 19, 20) and a gear-change draw member (1) conducted trom the manual change element (21), also a connection device (5, 3) connecting the action part (2) and the gear-change draw member (1), the connection device (5, 3) comprising a tubular socket (6) and a securable and releasable attachment part (3) which can be introduced into and adjusted in the tubular socket (6), characterised in that the attachment part (3) is for the one part insertable in self-holding manner into the tubular socket (6) and for the othar part is releasable again due to the fact that on the one of the elements tubular socket (6) and attachment part (3) at least one detent face (3a) extending in the insertion direction is provided and on the other of these elements there is provided at least one engagement element (7) which slides over the detent face (3a) in insertion and can be lifted away from the detent face (3a) by hand for release.

2. Gear-change system according to Claim 1, characterised in that the connection device comprises a housing part (5) of somewhat sleeve-shaped basic form, on the one and of which there engages an end part of the gear - change draw member (1) and on the other end of which the tubular socket (6) for the attachment part (3) connected with the action part (2) is provided.

3. Gear-change system according to Claim 1 or 2, characterised in that that attachment part (3) comprises a a plurality of detent notches (3a) one behind the other on its surface in the direction of insertion.

4. Gear-change system according to Claim 3, characterised in that the engagement element (7) is formed, for cooperation with the detent notches (3a) arranged on one or both sides on the attachment part (3), with at least one detent tooth (7a), the engagenent element (7) being held in the engagement position under the stress of a spring (8) and being pivotable away and bringable out of engagement by hand.

5. Gear-change system according to one of Claims 1 to 4, characterised in that two engagement elements (7) are arranged somewhat in fork manner for co-operation with the attachment part (3), with mutually opposite engagement elements (7a) which are held by means of a spring element (8) constantly in engagement with the attachment part (3) and are arranged to be bringable out of engagement by means of tabtype grasping elements (7c).

6. Gear-change system according to one of Claims 1 to 4, characterised in that the engagement element (7) is bringable by means of a spring element (8) of low strength into engagement with the attachment part (3) and is held constantly in engagement by means of self-reinforcement by reason of the tension stress in the gear-change draw device, this engagement being releasable by means of a handle (7c) on the engagement element (7).

7. Gear-change system according to Claim 1 or 2, characterised in that the engagement element (10) comes into engagement for co-operation with the attachment part (3) by means of a spring (8) of low strength and is held constantly in engagement by means of self-locking as a result of the tension of the gear-change draw device, this engagement being releasable by means of a handle (10c) on the engamenent element (10).

8. Gear-change system according to one of Claims 1 to 3, characterised in that the engagement element (7) is formed, for co-operation with the attachment part (3), as a spring tongue (7) engaging on at least one side in detent notches (3a) distributed over the length of the attachment part (3), which tongue is held in engagement by means of its own spring stress or by means of a cap part (9) grasping tightly over the housing part (5), the spring stress or the retention of the spring tongue (7) when situated in engagement being eliminatable by stripping off of the cap part (9) in the longitudinal direction of the housing (5).

9. Gear-change system accoring to Claim 1 or 2, characterised in that the socket (6) comprises a plurality of detent notches (6a) in distribution over its length and in that an engagement element (4a) spread open by a spring is provided on the attachment part.

10. Gear-change system according to Claim 1 or 2, characterised in that the attachment cart (3) comprises as detent face a substantially smooth clamping face and in that the engagement element (10) is formed as a clamping element cooperating under spring initial stress (8) with this clamping face, is mounted pivotably on the socket (6) and formed with a release handle (10c) protruding from tha socket.

11. Gear-change system according to one of Claims 1 to 3, characterised in that the engagement element is formed by a perforated spring washer (13) arranged in the socket obliquely of the direction of insertion, where the attachment part (3) penetrates the perforation (14) of the spring washer (13), one edge of the perforation (14) is in detent engagement with the detent face of the attachment part (3) and the spring washer (13) is deflectable out of the oblique position against spring stress, for the release of the detent engagement.

12. Gear-change system according to one of Claims 1 to 4 and 6, characterised in that in a housing part (5) forming the tubular socket (6) a pocket is formed laterally beside the tubular socket (6), in that a claw (7) of curved configuration is accommodated in this pocket, in that this claw (7) is pivotably mounted in a trough formed within the pocket, in that one end of the claw (7) is formed as a detent tooth (7a) for engagement in detent notches (3a) of the attachment part (3), in that the other end (7c) of the claw (7) is conducted out of the housing part (5) and formed as release handle (7c), and in that within the pocket there is further housed a leaf spring (8) which for the one part rests on a defining wall of the pocket and for the other part stresses the claw (7) with its end formed as detent tooth (7a) into engagement with the detent notches (3a).

13. Gear-change system according to Claim 12, characterised in that a bearing bend is formed on the claw (7) within the pocket and is mounted pivotably in the trough.

14. Gear-change system according to one of Claims 2 to 13, characterised in that the housing part is formed as a die-casting.

15. Gear-change system according to one of Claims 2 to 13, characterised in that the housing part is formed as a synthetic plastics material injection-moulding.

16. Gear-change system according to one of Claims 1 to 15, characterised in that the attachment part (3) is made with angular cross-section.

17. Gear-change system according to one of Claims 1 to 15, characterised in that the attachment part (3) is made with round cross-section.

18. Gear-change system according to Claim 17, charscterised in that the attachment part (3) is made with detent notches extending all round.

19. Gear-change system according to one of Claims 3 to 6, 8, 9, 11 and 12 to 18, characterised in that the detent notches (3a) are made in the form of a saw tooth.

20. Gear-change system according to one of Claims 1 to 19, characterised in that the gear-change device (18, 19, 20) is made as hub gear-change device.

21. Gear-change system according to Claim 20, characterised in that the action part (2) is formed as a gear-change chain.

22. Gear-change system according to Claim 21, characterised in that the attachment part (3) is fitted on the end of the gear-change chain (2).

23. Gear-change system according to one of Claims 1 to 19, characterised in that the gear-change device is formed as chain-shift device.

24. Gear-change system according to one of Claims 1 to 23, characterised in that the gear-change device (18, 19, 20) comprises a gear-change element (18) which is initially stressed by a strong spring (19) into a basic position determined by a stop (20) and is settable into further gear positions by the change element (21) through the intermediary of the gear-change draw device.

**Revendications**

1. Changement de vitesses sur une bicyclette ou similaire, comprenant un dispositif de changement de vitesses (18, 19, 20) sur le roue arrière de la bicyclette, un sélecteur manuel (21) disposé à portée de main de l'utilisateur de la bicyclette, et un ensemble de câble de changement de vitesses reliant le sélecteur manuel (21) au dispositif de changement de vitesses (18, 19, 20), cet ensemble de câble de changement de vitesses étant réalisé avec une partie d'actionnement (2) reliée au dispositif de changement de vitesses (18, 19, 20) et avec un câble de changement de vitesses (1) amené depuis le sélecteur manuel (21), ainsi qu'avec un élément de liaison (5, 3) reliant la partie d'actionnement (2) et le câble de changement de vitesses (1), l'élément de liaison (5, 3) présentant une pièce réceptrice (6) tubulaire et un élément de raccordement (3) qui peut être introduit dans la pièce réceptrice tubulaire (6) et déplacé dans cette dernière, de manière à pouvoir être bloqué et débloqué, caractérisé en ce que l'élément de raccordement (3) est d'une part enclenchable de manière autobloquante dans la pièce réceptrice tubulaire (6) et d'autre part déblocable de cette dernière, par le fait qu'il est prévu sur un des éléments -pièce réceptrice tubulaire (6) et élément de raccordement (3) - au moins une face de crantage (3a) s'étendant dans le sens d'enclenchement, et sur l'autre de ces éléments au moins un organe d'engagement (7) qui coulisse au-dessus et au-delà de la face de crantage (3a) lors de l'enclenchement et qui en vue du déblocage peut être soulevé manuellement à l'écart de la face de crantage (3a).

2. Changement de vitesses selon la revendication 1, caractérisé en ce que l'élément de liaison présente une partie de logement (5) présentant approximativement la forme de base d'un manchon, à une extrémité de laquelle arrive une partie finale du câble de changement de vitesses (1), et à l'autre extrémité de laquelle est prévue la pièce réceptrice tubulaire (6) destinée à l'élément de raccordement (3) relié à la partie d'actionnement (2).

3. Changement de vitesses selon la revendication 1 ou 2, caractérisé en ce que l'élément de raccordement (3) présente sur sa surface une multiplicité d'entailles de crantage (3a) disposées les unes derrière les autres dans le sens d'enclenchement.

4. Changement de vitesses selon la revendication 3, caractérisé en ce que l'organe d'engagement (7) est, afin de coopérer avec les entailles de crantage (3a) disposées d'un ou des côtés sur l'élément de raccordement (3), configuré avec au moins une dent de crantage (7a), l'organe d'engagement (7) étant maintenu en position d'engagement sous la contrainte d'un ressort (8), et pouvant être manuellement désengagé par pivotement.

5. Changement de vitesses selon une des revendications 1 à 4, caractérisé en ce qu'afin de coopérer avec l'élément de raccordement (3), deux organes d'engagement (7) sont disposés approximativement à la manière d'une fourche et sont munis d'éléments d'engagement (7a) mutuellement en vis-à-vis, éléments qui sont maintenus constamment en engagement avec l'élément de raccordement (3) au moyen d'un élément élastique (8), et qui peuvent être désengagés au moyen d'éléments de préhension (7c) du genre pattes.

6. Changement de vitesses selon une des revendications 1 à 4, caractérisé en ce que l'organe d'engagement (7) peut être amené en engagement avec l'élément de raccordement (3) au moyen d'un élément élastique (8) de faible force, et est maintenu constamment en engagement - par un autorenforcement dû à la contrainte de traction de l'ensemble de câble de changement de vitesses, cet engagement pouvant être supprimé au moyen d'une manette (7c) prévue sur l'organe d'engagement (7).

7. Changement de vitesses selon la revendication 1 ou 2, caractérisé en ce qu'afin de coopérer avec l'élément de raccordement (3), l'organe d'engagement (10) est amené en engagement au moyen d'un ressort (8) de faible force, et est maintenu constamment en engagement par un autoblocage dû à la tension de l'ensemble de câble de changement de vitesses, cet engagement pouvant être supprimé au moyen d'une manette (10c) prévue sur l'organe d'engagement (10).

8. Changement de vitesses selon une des revendications 1 à 3, caractérisé en ce qu'afin de coopérer avec l'élément de raccordement (3), l'organe d'engagement (7) est configuré sous la forme d'une languette élastique (7) s'engageant au moins d'un côté dans des entailles de crantage (3a) réparties sur la longueur de l'élément de raccordement (3), languette qui est maintenue en engagement au moyen de sa propre tension élastique ou au moyen d'une partie de chapeau (9) recouvrant hermétiquement la partie de logement (5), la tension élastique ou encore le maintien en engagement de la languette élastique (7) pouvant être supprimé en retirant la partie de chapeau (9) dans le sens longitudinal du logement (5).

9. Changement de vitesses selon la revendication 1 ou 2, caractérisé en ce que la pièce réceptrice (6) présente une multiplicité d'entailles de crantage (6a) réparties sur sa longueur, et en ce qu'un organe d'engagement (4a) élastiquement écarté est rapporté sur l'élément de raccordement.

10. Changement de vitesses selon la revendication 1 ou 2, caractérisé en ce que l'élément de raccordement (3) présente comme face de crantage une face de serrage sensiblement lisse, et en ce que l'organe d'engagement (10) est configuré sous la forme d'un élément de serrage coopérant avec cette face de serrage sous précontrainte de ressort (8), est monté pivotant sur la pièce réceptrice (6), et est muni d'une manette de désengagement (10c) faisant saillie hors de la pièce réceptrice.

11. Changement de vitesses selon une des revendications 1 à 3, caractérisé en ce que l'organe d'engagement est constitué par un disque élastique perforé (13) disposé dans la pièce réceptrice en oblique par rapport au sens d'enclenchement, l'élément de raccordement (3) traversant la perforation (14) du disque élastique (13), un bord de la perforation (14) étant en engagement par crantage avec la face de crantage de l'élément de raccordement (3), et le disque élastique (13) pouvant être dévié de sa position oblique à l'encontre de la tension élastique afin de supprimer l'engagement par crantage.

12. Changement de vitesses selon une des revendications 1 à 4 et 6, caractérisé en ce qu'une poche est configurée latéralement à côté de la pièce réceptrice tubulaire (6) dans la partie de logement (5) formant la pièce réceptrice tubulaire (6), en ce qu'une griffe (7) configurée en forme d'étrier est reçue dans cette poche, en ce que cette griffe (7) est montée pivotante dans une cuvette configurée à l'intérieur de la poche, en ce qu'une extrémité de la griffe (7) est configurée sous la forme d'une dent de crantage (7a) destinée à s'engager dans des entailles de crantage (3a) de l'élément de raccordement (3), en ce que l'autre extrémité (7c) de la griffe mène hors de la partie de logement (5) et est configurée sous la forme d'une manette de désengagement (7c), et en ce qu'un ressort à lame (8) est en outre disposé à l'intérieur de la poche, ressort qui d'un côté s'appuie contre une paroi de délimitation de la poche, et qui de l'autre côté tend la griffe (7) en engagement avec les entailles de crantage (3a), par son extrémité configurée en dent de crantage (7a).

13. Changement de vitesses selon la revendication 12, caractérisé en ce qu'un étrier de montage monté pivotant dans la cuvette est recourbé sur la griffe (7) à l'intérieur de la poche.

14. Changement de vitesses selon une des revendications 2 à 13, caractérisé en ce que la partie de logement est réalisée sous la forme d'une pièce moulée sous pression.

15. Changement de vitesses selon une des revendications 2 à 13, caractérisé en ce que la partie de logement est réalisée sous la forme d'une pièce en matière plastique moulée par injection.

16. Changement de vitesses selon une des revendications 1 à 15, caractérisé en ce que l'élément de raccordement (3) est réalisé avec une section polygonale.

17. Changement de vitesses selon une des revendications 1 à 15, caractérisé en ce que l'élément de raccordement (3) est réalisé avec une section ronde.

18. Changement de vitesses selon la revendication 17, caractérisé en ce que l'élément de raccordement (3) est réalisé avec des entailles de crantage s'étendant tout autour de l'élément.

19. Changement de vitesses selon une des revendications 3 à 6, 8, 9, 11 et 12 à 18, caractérisé en ce que les entailles de crantage (3a) sont réalisées en forme de dents de scie.

20. Changement de vitesses selon une des revendications 1 à 19, caractérisé en ce que le dispositif de changement de vitesses (18, 19, 20) est réalisé sous la forme d'un dispositif de changement de vitesses dans le moyeu.

21. Changement de vitesses selon la revendication 20, caractérisé en ce que la partie d'actionnement (2) est réalisée sous la forme d'une chaînette de changement de vitesses (2).

22. Changement de vitesses selon la revendication 21, caractérisé en ce que l'élément de raccordement (3) est monté à l'extrémité de la chaînette de changement de vitesses (2).

23. Changement de vitesses selon une des revendications 1 à 19, caractérisé en ce que le le dispositif de changement de vitesses est réalisé sous la forme d'un dérailleur.

24. Changement de vitesses selon une des revendications 1 à 23, caractérisé en ce que le dispositif de changement de vitesses (18, 19, 20) comprend un élément de changement de vitesses (18), qui est précontraint par un ressort puissant (19) à une position de base déterminée par une butée (20), et que le sélecteur de vitesses (21) permet de régler à différentes positions de vitesses, par l'intermédiaire de l'ensemble de câble de changement de vitesses.

FIG.1  FIG.2  FIG.3  FIG.4

# FIG.5

**FIG.6**

**FIG.7**

# FIG.8

# FIG.9

## FIG.8A

## FIG.9A

# FIG.10

# FIG.11

# FIG.12